# EUROPEAN PATENT SPECIFICATION

(11) **EP 2 622 812 B1**
(45) Date of publication and mention of the grant of the patent: **06.08.2014**
(21) Application number: 10759915.1
(22) Date of filing: 30.09.2010
(51) Int. Cl.: H04L 29/06, H04L 29/08, H04L 12/26

(54) **METHOD AND NETWORK ENTITY FOR CHECKING, IN AN IP BASED COMMUNICATIONS NETWORK, A STATUS OF A DESTINATION NETWORK**
VERFAHREN UND NETZWERKEINHEIT ZUR ÜBERPRÜFUNG EINES ZUSTANDES EINES ZIELNETZWERKS IN EINEM IP-GESTÜTZTEN KOMMUNIKATIONSNETZ
PROCÉDÉ ET ENTITÉ DE RÉSEAU DE VÉRIFICATION, DANS UN RÉSEAU DE COMMUNICATION IP, D'UN ÉTAT D'UN RÉSEAU DE DESTINATION

(43) Date of publication of application: 07.08.2013
(73) Proprietor: Telefonaktiebolaget L M Ericsson (PUBL), 164 83 Stockholm (SE)
(72) Inventor: NOLDUS, Rogier August Caspar Joseph, NL-5052 BM Goirle (NL); DEN HARTOG, Jos, NL-2904 SE Capelle a/d Ijssel (NL)
(74) Representative: Verduin, Herman Jan
(86) International application number: PCT/EP2010/064588
(87) International publication number: WO 2012/041383

(56) References cited:
- EP-A2- 1 843 547
- WO-A1-2010/099829
- US-A1- 2010 189 072
- QUALCOMM: "Optimization for Capability Exchange Information", 2 May 2006 (2006-05-02), 3GPP DRAFT; S2-061473, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050255663, pages 1-3, [retrieved on 2006-05-02] page 1 - page 2
- ROSENBERG J ET AL: "SIP: Session Initiation Protocol", 20020601; 20020600, 1 June 2002 (2002-06-01), pages 1-269, XP015009039,

## Description

### TECHNICAL FIELD

The invention relates to a method for checking a status of destination network entity. More in particular, the invention relates to a method for checking a signaling path between an originating party and a destination party, e.g. in an Internet Protocol (IP) based communications network, such as a Voice over IP (VoIP) network or a Packet Switched (PS) network. More in particular, the invention relates to a method for checking a signaling path between an originating party and a destination party in a Session Initiation Protocol (SIP) based communications network, such as an Internet Protocol (IP) Multimedia Subsystem (IMS) network.

### BACKGROUND

Within an Internet Protocol (IP) Multimedia Subsystem (IMS) network, a Session Initiation Protocol (SIP) session may be established between two end-users in the IMS network or a stand-alone SIP transaction may be applied between two end-users in the IMS network. The remainder of the invention will focus on SIP session, but the principle of the invention is equally applicable to a stand-alone SIP transaction. The SIP session is established between an initiating party and a destination party. Both parties are registered with a serving network. The destination party may have one or more terminals. The SIP session can't be established with more than one terminal at the same time. It is understood that, even though a SIP request may be forked to two or more terminals, the actual establishment of a SIP session is restricted to one terminal at the most.

### SUMMARY

When establishing a Session Initiation Protocol (SIP) session towards a destination subscriber, by means of sending a SIP Invite to that destination subscriber, a signaling path towards that destination subscriber is established. Establishing a signaling path entails the seizing of network resources and the starting of processes in many nodes.

There is currently no procedure available for checking a status of a destination network entity while refraining from establishing a SIP session between the requesting network entity and said destination network entity. There is for instance no procedure available for checking whether a signaling path can be established without actually establishing that path. For network performance analysis and for doing characteristics measurements, it may be needed to check the existence of a signaling path without actually establishing this path. Also, there is no procedure available to check whether a certain domain is indeed a valid domain for handling SIP sessions. For example, consider the Internet Protocol (IP) Multimedia Subsystem (IMS) public user identity (IMPU) sip:john.smith@ericsson.com. A system operator, engaged in fault finding, may want to test whether ericsson.com is a valid domain for handling SIP sessions. Relevant prior art is represented by the patent applications EP 1 843 547 A2 and WO 2010/099829 A1.

An objective of the present invention is to at least partially remove the above drawback. More in general, an object of the invention is to provide a method for checking a status of destination network entity, e.g. for checking a signaling path between an originating party and a destination party. The objectives of the invention are achieved by means of the appended independent claims.

It is provided a method for checking, in an IP based communications network, preferably an IP based multimedia communications network, a status of a destination network entity, the method comprising:_transmitting, by a requesting network entity, a probe request towards the destination network entity, said probe request requesting said destination network entity to indicate to the requesting network entity its status, and_transmitting by the destination network entity, or by a network entity acting on behalf of the destination network entity, in response to receiving the probe request, a final response, while refraining from establishing a session between the requesting network entity and said destination network entity, wherein the final response provides an indication of the status of the destination network entity.

Optionally, the IP based communications network is an IP Multimedia Subsystem (IMS) network.

More specifically, is provided a method for checking, in a SIP based communications network, a status of a destination network entity, the method comprising:_transmitting, by a requesting network entity, a probe request towards the destination network entity, said probe request requesting said destination network entity to indicate to the requesting network entity its status, and_transmitting by the destination network entity, or a network entity acting on behalf of the destination network entity, in response to receiving the probe request, a final response, while refraining from establishing a SIP session between the requesting network entity and said destination network entity, wherein the final response provides an indication of the status of the destination network entity.

Preferably, the probe request and the final response are messages, part of a transaction, wherein the final response ends the transaction. More specifically, the probe request and the final response may be SIP messages, part of a SIP transaction, wherein the final response ends the SIP transaction.

Hence, it is possible to check a status of a destination network entity while refraining from establishing a (SIP) session between the requesting network entity and said destination network entity. It will be clear that the probe request is defined such within the (SIP) communication protocol that the destination network entity returns the requested status information in a final response. No (SIP) session is established between the requesting network entity and said destination network entity.

Optionally, the status is one or more of existence, reachability and operational condition of the destination network entity, and the final response provides an indication whether or not the destination network entity exists and/or is reachable, and/or of its operational condition. Hence, the method allows checking whether a signalling path can be established without actually establishing that path.

The final response may be a 200 Ok status message if the destination network entity exists and is reachable, and may be a non-2xx final response if the destination network entity does not exist and/or is not reachable, and/or its operational condition does not allow communication with the destination network entity. A non-2xx final response is herein understood as a final response having a numeric index with value 300 or higher.

Optionally, the transmitting of the final response is performed by a service acting for the destination entity.

Optionally, the destination network entity is a domain capable of receiving and accepting SIP session establishment requests, wherein the network entity acting for the domain may be an Interconnect Border Control Function (IBCF) of an IMS network serving the domain, or a Serving Call Session Control Function (S-CSCF) querying a Domain Name Server (DNS) for providing an IP address for that domain. Hence the method allows probing of a domain.

Optionally, the destination network entity is an IMS subscriber, wherein the network entity acting for the IMS subscriber may be an S-CSCF with which the IMS subscriber is registered. Hence the method allows probing of a subscriber.

Optionally, the destination network entity is a terminal associated with the IMS subscriber, wherein the network entity acting for the terminal may be a Proxy Call Session Control Function (P-CSCF) with which the terminal is associated or is an IMS service acting on behalf of the IMS subscriber, such as a call forwarding service. Hence the method allows probing of a subscriber terminal.

Optionally, the final response includes information relating to the subscriber, such as a registration state of the subscriber.

Optionally, the subscriber is identified, in the probe request message, through a Telephone Uniform Resource Identifier (Tel: URI), and the method includes converting the Tel: URI into SIP URI, e.g. using an ENUM (see IETF RFC 3761) query. Hence, also a subscriber (terminal) identified through a telephone number may be probed.

Optionally, the destination network entity is an IMS network service entity, wherein the network entity acting for the IMS network service entity may be an Application Server (AS).

Optionally, the requesting network entity is a User Agent (UA) or an AS.

Optionally, the probe request includes a condition, e.g. to limit the checking to one or more predetermined types of destination network entities, and the destination network entity provides the final response taking account of the condition. Thus, it is possible to probe the destination network entity for a specific status of interest. It is for instance possible to check whether or not a subscriber has a mobile communications device that can be reached.

It is also provided a network entity for use in an IP based communication network, comprising a receiving unit arranged for receiving a probe request, said probe request requesting said network entity to indicate to an originator of the probe request a status of the network entity, or of a further network entity on behalf of which the network entity acts, a processing unit arranged for determining the status of the network entity, or of the further network entity, and a transmitting unit arranged for transmitting, in response to receiving the probe request, a final response to the originator of the probe request, wherein the final response provides an indication of the status of the destination network entity, or the further network entity on behalf of which the network entity acts.

Preferably, the probe request and the final response are messages, part of a transaction, wherein the final response ends the transaction. More specifically, the probe request and the final response may be SIP messages, part of a SIP transaction, wherein the final response ends the SIP transaction. Hence, the network entity can refrain from establishing a SIP session with the originator.

Such network entity may act as the destination network entity, or the network entity acting on behalf of the destination network entity, in the method described hereinabove, and may be formed by one of
- a domain capable of receiving and accepting SIP session establishment requests,
- an IBCF of an IMS network serving the domain, acting for the domain,
- an S-CSCF acting for the requesting network entity querying a DNS for an IP address for a domain,
- an S-CSCF with which a destination IMS subscriber is registered,
- a terminal associated with an IMS subscriber,
- a P-CSCF with which a terminal associated with an IMS subscriber is associated, or
- an IMS service acting on behalf of the IMS subscriber, such as a call forwarding service.

Also with respect to this network entity it applies that the status may be one or more of existence, reachability and operational status of the destination network entity. Optionally the final response is a 200 Ok status message if the network entity or the further network entity exists and is reachable, and is a non-2xx final response if the network entity or the further network entity does not exist and/or is not reachable, and/or its operational condition does not allow communication with the destination network entity.

It is also provided a network entity for use in an IP based multimedia communications network, comprising a transmitting unit arranged for transmitting a probe request towards a destination network entity, said probe request instructing said destination network entity to transmit, in response to receiving said probe request, a final response, wherein the final response provides an indication of a status of the destination network entity, or a further network entity on behalf of which the destination network entity acts.

Preferably, the probe request and the final response are messages, part of a transaction, wherein the final response ends the transaction. More specifically, the probe request and the final response may be SIP messages, part of a SIP transaction, wherein the final response ends the SIP transaction. Hence, the destination network entity can refrain from establishing a SIP session with the network entity.

Such network entity may act as the requesting network entity in the method described hereinabove, and may e.g. be a UA or an AS.

It is also provided a SIP message arranged for instructing a network entity to transmit, in response to receiving said SIP message, a final response, while refraining from establishing a SIP session between the originator and said network entity, wherein the final response provides an indication of a status of the network entity, or a further network entity on behalf of which the network entity acts.

It will be appreciated that the present invention provides a tool for IMS network measurement. It may be used for, among others, fault finding e.g. when there is a need to check whether a particular subscriber is currently contactable.

It is proposed a method for checking a status of a destination network entity. Such method can be used for checking a signaling path between an originating party and a destination party. If desired, said method can be performed at one of the following three levels:
- checking whether the domain of the destination party is a valid domain and is capable of receiving and accepting Session Initiation Protocol (SIP) session establishment requests;
- checking whether the destination party is an Internet Protocol (IP) Multimedia Subsystem (IMS) user and checking that destination party's current capability to receive and accept SIP sessions establishment requests;
- checking a signaling path towards destination party's one or more terminals.

Hence, the method allows for assessing the status, e.g. for "probing" the existence and/or reachability, of a SIP network, a SIP end-user, one or more SIP end-user's terminals, and/or an IMS service. This method facilitates an, authorized, User agent (UA) or Application server (AS) to send a probe request towards SIP network, a SIP end-user or one or more SIP end-user's terminals, whereby this probe request constitutes a request towards said SIP network, SIP end-user or one or more SIP end-user's terminals to indicate its status, e.g. its existence and/or reachability. The addressed SIP network, SIP end-user or one or more SIP end-user's terminals may provide a final response without taking any further action, specifically without establishing a SIP session with the originator of the request.

Preferably, the method is a stand-alone transaction, i.e. does not lead to the establishment of a SIP session. Hence, the transfer of the final response leads to termination of the relationship between initiator of the probe request and the responder of the probe request.

### BRIEF DESCRIPTION OF THE DRAWINGS

The invention will now be further elucidated by means of non-limiting examples referring to the drawing, in which
Figs. 1A, 1B and 1C show schematic representations of examples of general functioning of a method according to the invention;
Fig. 1D shows a schematic representation of a general example of a system according to the invention;
Fig. 1E shows a schematic representation of another general example of a system according to the invention
Fig. 2 shows a schematic representation of a second example of a network probe case;
Fig. 3 shows a schematic representation of a second example of a subscriber probe case;
Fig. 4 shows a schematic representation of a second example of a subscriber terminal probe case;
Fig. 5 shows a schematic representation of an example of a probe towards a public service;
Fig. 6 shows a schematic representation of an example wherein the probed destination subscriber is identified through a Tel: URI;
Fig. 7 shows the scenario wherein the destination subscriber is not known in ENUM; and
Fig. 8 shows an example using circuit switched breakout for the probe request.

### DETAILED DESCRIPTION

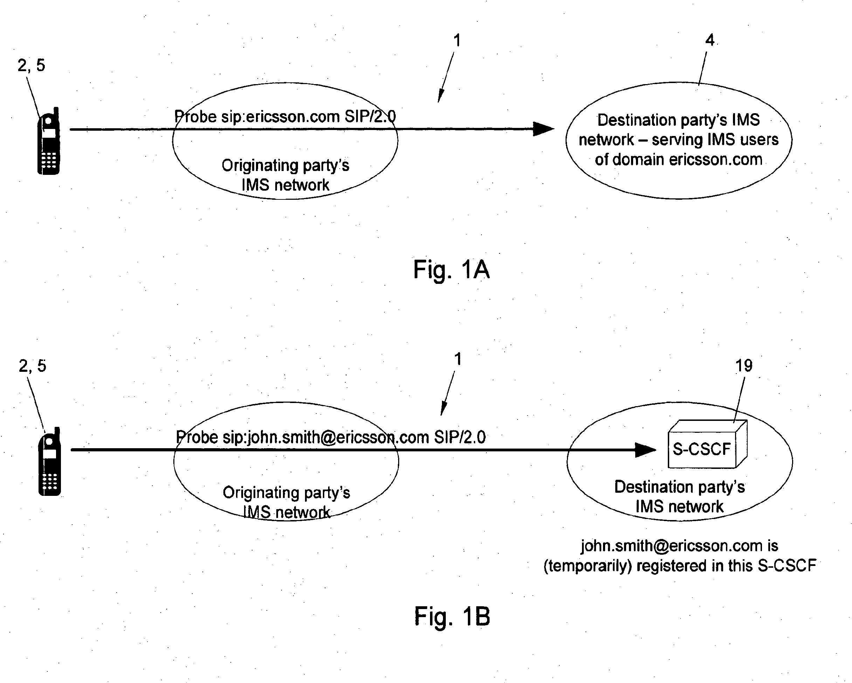

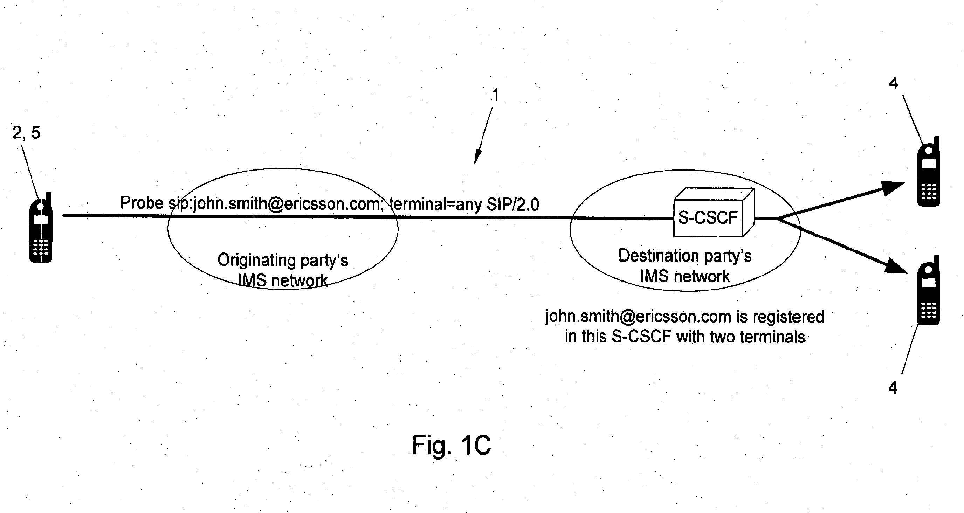

Figs. 1A, 1B and 1C show schematic representations of examples of general functioning of a method according to the invention applied within a network 1.

In Fig. 1A, the originating party 2, here the Session Initiation Protocol (SIP) User Agent (UA), e.g. from a User Equipment (UE), performs a probe on the domain "ericsson.com". Thereto the originating SIP UA 2 transmits a probe request destined for the Internet Protocol (IP) Multimedia Subsystem (IMS) network serving (for SIP sessions) the domain "ericsson.com". Hence the IMS network serving "ericsson.com" is the destination network entity 4.

In Fig. 1B, the originating party 2, here the SIP UA, e.g. from a UE, performs a probe on a particular user of that domain, viz. john.smith@ericsson.com. Thereto the originating SIP UA transmits a probe request destined for a Serving Call Session Control Function (S-CSCF) serving the user "john.smith@ericsson.com". Hence in this example "john.smith@ericsson.com" is the destination network entity 4. The S-CSCF serving john.smith@ericsson.com is a network entity acting on behalf of the destination network entity 4.

In Fig. 1C, the originating party 2, here the SIP UA, e.g. from a UE, performs a probe on any user terminal of this user. Thereto the originating SIP UA transmits a probe request destined for the S-CSCF serving the user terminals "john.smith@ericsson.com; terminal=any". Hence the terminals of "john.smith@ericsson.com" are destination network entity 4.

In the above cases, a non-2xx final response indicates that the destination network or subscriber does not exist or that the destination network or subscriber is currently not reachable or not registered. A non-2xx final response is herein understood as a final response having a numeric index with value 300 or higher.

The examples of Figs. 1A, 1B and 1C will herein also be referred to as network probe, subscriber probe and subscriber terminal probe, respectively.

For clarity, in the following, transmission of a probe request will be regarded as a dedicated SIP method, herein referred to as "Probe". For instance, probing a domain is represented by addressing the probe request towards the domain, e.g.:

### Probe sip:ericsson.com SIP/2.0

It will be appreciated that, alternatively, transmission of the probe request may be an extension of an existing SIP method, e.g. the SIP method Message (see IETF RFC 3428 [2]).

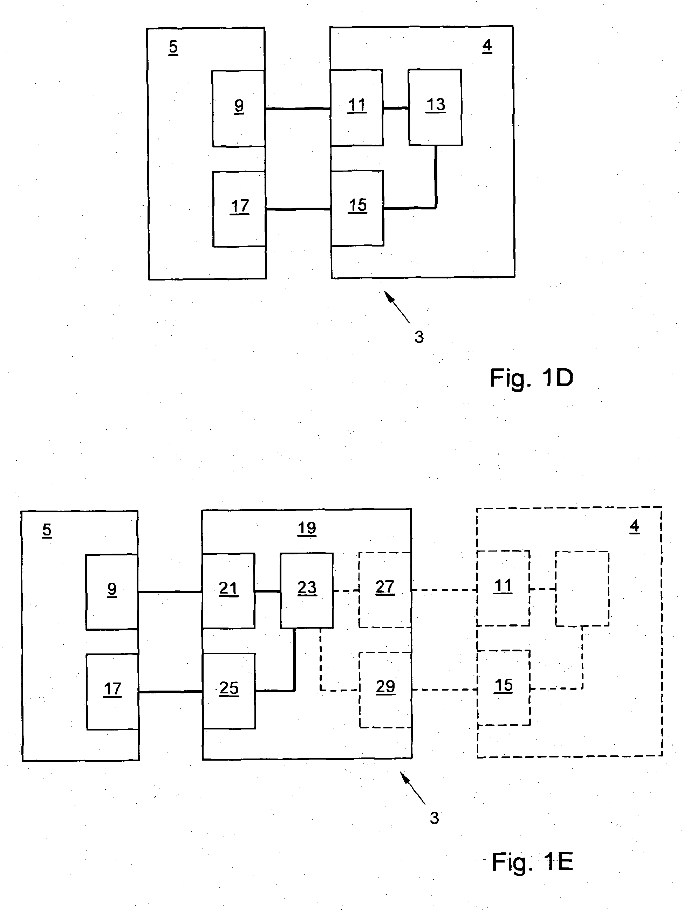

Fig. 1D shows a schematic representation of a general example of a system 3 according to the invention.

The system of Fig. 1D comprises a requesting network entity 5 and a destination network entity 4. The requesting network entity 5 comprises a transmitting unit 9 for transmitting a probe request towards the destination network entity 4. The destination network entity 4 comprises a receiving unit 11 for receiving the probe request. The destination network entity 4 further comprises a processing unit 13 arranged for determining the status of the destination network entity 4. The destination network entity 4 further comprises a transmitting unit 15.

As will be explained below, the probe request received by the destination network entity 4 instructs the processing unit 13 to determine the status of the destination network entity 4. Subsequently, in response to receiving said probe request, the transmitting unit 15 transmits a final response, wherein the final response provides an indication of the determined status of the destination network entity towards the requesting network entity 5. The requesting network entity 5 comprises a receiving unit 17 for receiving the final response.

Fig. 1E shows a schematic representation of another general example of a system 3 according to the invention.

The system of Fig. 1E comprises a requesting network entity 5 and a destination network entity 4. The system of Fig. 1E further comprises an intermediate network entity 19 acting on behalf of the destination network entity 4.

The requesting network entity 5 comprises a transmitting unit 9 for transmitting a probe request towards the intermediate network entity 19. The intermediate network entity 19 comprises a receiving unit 21 for receiving the probe request. The intermediate network entity 19 further comprises a processing unit 23 arranged for determining the status of the destination network entity 4. The intermediate network entity 19 further comprises a transmitting unit 25.

As will be explained below, the probe request received by the intermediate network entity 19 instructs the processing unit 23 to determine the status of the destination network entity 4 on behalf of which the intermediate network entity 19 acts. Subsequently, in response to receiving said probe request, the transmitting unit 25 transmits a final response, wherein the final response provides an indication of the determined status of the destination network entity 4 on behalf of which the intermediate network entity 19 acts towards the requesting network entity 5. The requesting network entity 5 comprises a receiving unit 17 for receiving the final response.

In the example of Fig. 1E the processing unit 23 of the intermediate network entity 19 may determine the status of the destination network entity 4 in different ways. The processing unit 23 may be aware of the status of the destination network entity 4, e.g. by means of registration of the destination network entity 4 with the intermediate network entity 19, or by means of information available in a memory associated with the intermediate network entity 19. Alternatively, or additionally, the intermediate network entity may probe the destination network entity 4. Thereto the intermediate network entity may comprise a further transmitting unit 27 and a further receiving unit 29.

As will be elucidated below, the status of the destination network entity 7 may be one or more of existence, reachability and operational condition (such as busy, malfunction, etc.) of the destination network entity.

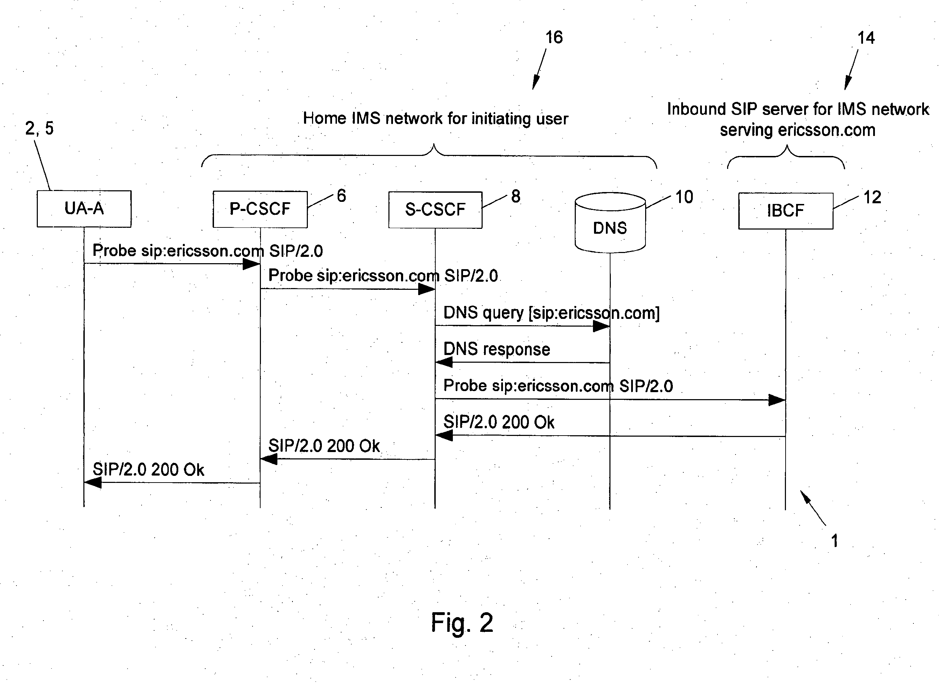

Fig. 2 shows a schematic representation of a second example of a network probe case. In Fig. 2, the SIP Probe request is transferred from the user agent UA-A 2 to a Proxy Call Session Control Function (P-CSCF) 6 and an S-CSCF 8 in accordance with standard procedures, known per se: *Probe sip:ericsson.com SIP*/*2.0.* The S-CSCF will perform a Domain Name Server (DNS) query for the domain "ericsson.com".

In this example, the S-CSCF 8 asks the DNS 10 for the address of a SIP server for the domain "ericsson.com". Assuming that "ericsson.com" is used as a domain for SIP services, this domain will be provisioned in the DNS 10. Hence, the DNS returns the address (e.g. considering NAPTR record, SRV record, A/AAAA record) for the Interconnect Border Control Function (IBCF) 12 of the IMS network 14 that serves the domain "ericsson.com". The IBCF is the entry point for SIP signalling in the IMS network. The IBCF 12 is aware, e.g. through configuration, that it is serving subscribers within the domain "ericsson.com". Hence, the IBCF, acting for the domain "ericsson.com", can provide an affirmative response to the probe request, by returning a 200 Ok result message (see Fig. 2). The 200 Ok message will be forwarded to the originator 2 of the probe request, here the UA-A 2, according to standard protocol known per se.

It is not required that the IBCF 12 forwards the SIP probe request to an Interrogating Call Session Control Function (I-CSCF). The IBCF, being the entry proxy for SIP signalling for this IMS network, may be configured with the domain names for which it is providing SIP services. Hence, the IBCF may be aware that it is serving subscribers within the domain "ericsson.com".

It will be appreciated that when the S-CSCF 8 receives, from the DNS 10, an IP address (or multiple IP addresses) for an inbound SIP server for the domain "ericsson.com", it may at that point already decide that "ericsson.com" is a valid (existing) domain for SIP services. However, the forwarding of the SIP probe request to that inbound SIP server gives further affirmative indication that the IMS domain "ericsson.com" is active and operational at that moment and that it is contactable.

Alternatively, if the IBCF 12 does not know the domain "ericsson.com" then it will return a non-2xx final response. If "ericsson.com" is not known in the DNS 10, then the S-CSCF 8 of the originating party will already generate a non-2xx final response. The non-2xx final response will be forwarded to the originator 2 of the probe request, here the UA-A, according to standard protocol known per se.

Hence, upon receiving the 200 Ok message, the originator 2 of the probe request now knows that "ericsson.com" is a valid (existing) domain for SIP services. Upon receiving the non-2xx final response the originator of the probe request now knows that "ericsson.com" is not a valid (existing) domain for SIP services. Thus, in general, the response to the probe request indicates to the originator 2 of the probe request a status of the probed domain.

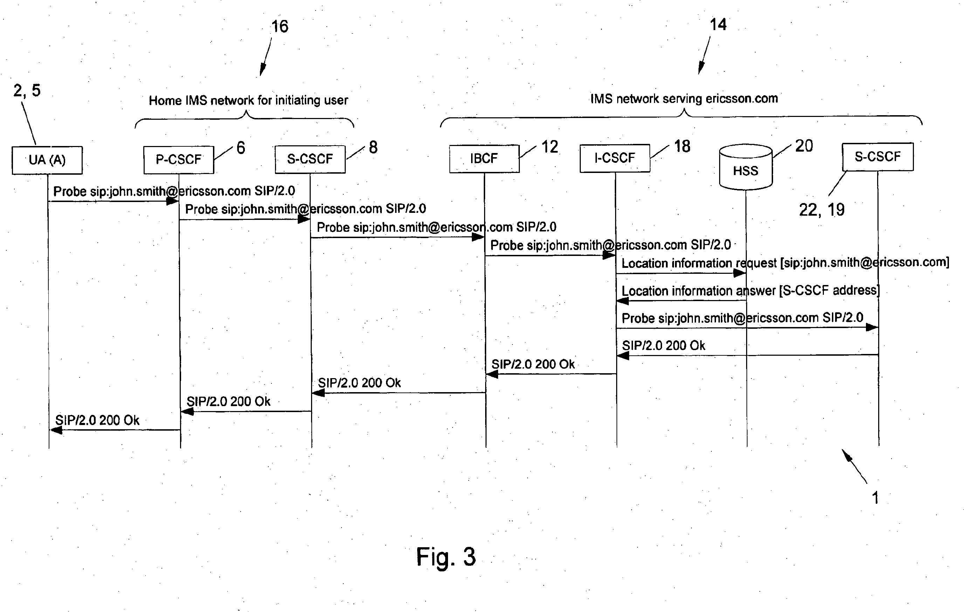

Fig. 3 shows a schematic representation of a second example of a subscriber probe case. In Fig. 3, the SIP Probe request is addressed towards the subscriber in accordance with standard procedures, known per se: *Probe sip:John.smith@ericsson.com SIP*/*2.0.* In the example of Fig. 3, the SIP Probe request is transferred from the originator's IMS network 16 to the destination subscriber's IMS network 14. It is noted that a DNS query by the S-CSCF 8 is not shown in Fig. 3 but may be performed conventionally. The IBCF 12, I-CSCF 18 and Home Subscriber Server (HSS) 20 apply standard IMS procedures for forward routing the SIP Probe request to the S-CSCF 22 where the destination subscriber, "sip:john.smith@ericsson.com", is registered.

In the example of Fig. 3, the S-CSCF 22 returns 200 Ok, since the destination subscriber is (temporarily) registered in this S-CSCF. In this example, the S-CSCF acts as the intermediate network entity 19. The originator 2 of the probe request now knows that the destination subscriber "sip:john.smith@ericsson.com" is a valid (existing) IMS user.

In a more elaborate embodiment, the response message, here 200 Ok, may include an indication about a registration state of the destination subscriber, i.e. registered or unregistered. In the latter case, the destination subscriber could, resulting from the probe request, be temporarily registered in S-CSCF 22, facilitating the S-CSCF to respond with 200 Ok, including the registration state.

If the destination subscriber is not known in the IMS network 14, then the I-CSCF 18 receives a negative result from the HSS 20. The I-CSCF 18 can then return a suitable response message to IBCF 12. In this example, the suitable response message could be a non-2xx final response.

Hence, upon receiving the 200 Ok message, the originator 2 of the probe request now knows that the destination subscriber "sip:john.smith@ericsson.com" is a valid (existing) destination subscriber. Upon receiving the non-2xx final response the originator of the probe request now knows that "sip:jolin.smith@ericsson.com" is not a valid (existing) destination subscriber. Thus, in general, the response to the probe request indicates to the originator 2 of the probe request a status of the probed destination subscriber.

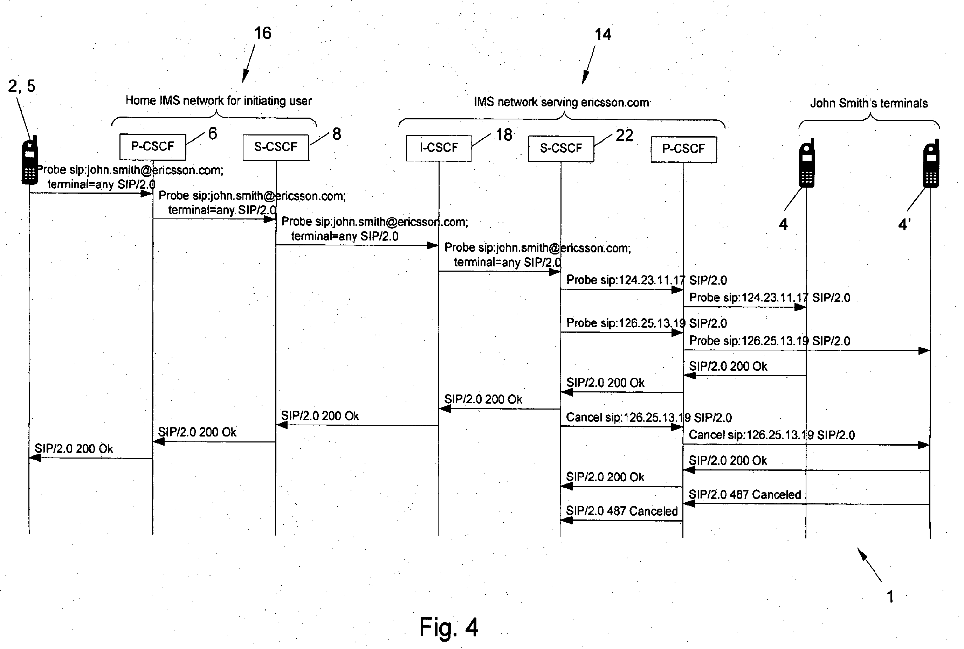

Fig. 4 shows a schematic representation of a second example of a subscriber terminal probe case. In Fig. 4, the SIP Probe request is addressed towards the subscriber while adding a designated parameter to the Request URI (R-URI), e.g.:

### Probe sip:john.smith@ericsson.com; terminal=any SIP/2.0

In Fig. 4, the SIP Probe request is transferred from the originator's IMS network 16 to the destination subscriber's IMS network 14. The HSS query by I-CSCF 18 is not shown in Fig. 4 but may be performed conventionally. The SIP Probe request is forwarded to the destination subscriber's S-CSCF 22, in accordance with standard SIP routing methodology. In this example, the S-CSCF 22 constructs a target set of contact addresses, in accordance with standard methodology. The S-CSCF 22 forwards the probe requests to the contact addresses included in the target set. Fig. 4 depicts an example wherein one terminal 4 returns a 200 Ok message. In this example, the S-CSCF 22 cancels the request to the other terminal 4'. It is also possible that both terminals 4, 4', e.g. substantially simultaneously, return a 200 Ok message. Common S-CSCF SIP forking has procedures in place for handling such cases.

In the example of Fig. 4, the 200 Ok received from (at least) one of the terminals 4, 4' is returned to the originator 2 of the probe request. The originator of the probe request now knows that "sip:john.smith@ericsson.com" is a valid (existing) IMS user and is contactable on at least one terminal.

If none of the terminals 4, 4' of the destination subscriber returns a 200 Ok message, then the S-CSCF 22 may return a suitable response message towards the originator 2. In this example, the suitable response message could be a non-2xx final response.

Hence, upon receiving the 200 Ok message, the originator 2 of the probe request now knows that the destination subscriber "sip:john.smith@ericsson.com" can be contacted on at least one terminal. Upon receiving the non-2xx final response the originator of the probe request now knows that "sip:john.smith@ericsson.com" cannot be contacted on a terminal. Thus, in general, the response to the probe request indicates to the originator of the probe request a status of the probed destination subscriber terminal.

Fig. 4 describes a case where the SIP Probe request is delivered to two terminals 4, 4' belonging to the same subscriber. The 200 OK is returned to the initiator 2 of the probe request. Instead of delivering the probe request to one or more terminals of the indicated subscriber, the probe request could also be handled by an IMS service acting on behalf of that indicated destination subscriber. E.g. the probe request may be routed unconditionally to a voice-mail system or the probe request may be routed to another destination. Provided that the probe request follows regular SIP routing, including retargeting etc., the response to the probe request message provides indication of the status, e.g. reachability (for SIP signaling), of the indicated subscriber, even when the probe request message is forwarded to another destination. Provisional responses like 181 Forwarding may apply in this case, indicating that the request message is being forwarded.

The example shown in Fig. 4 relates to the case wherein the originator 2 of the probe request indicates that (s)he wants to probe any terminal of the destination subscriber. The originator 2 of the probe request may, however, add one or more conditions to the request, in order to restrict the probing to selected terminals. For example:

### Probe sip:John.smith@ericsson.com; terminal=mobile SIP/2.0

The condition "terminal=mobile" merely is an illustrative example. Other conditions may be used. Supplying conditions to a SIP request message is common methodology. Refer e.g. to the Request-Disposition, Accept-Contact and Reject-Contact headers, well known in the art.

It is also conceivable that a communication capability is used as a probe condition. Suppose that a destination subscriber, e.g. sip:john.smith@ericsson.com, is be registered as SIP subscriber (e.g. through a SIP client on his mobile phone), but that that SIP client supports Messaging only, not voice. By including a Multimedia telephony (MMTel) condition in the probe request, the response to the probe request will be refined for the requested communication services. The condition, in the form of an IMS communication services indicator (ICSI) feature tag may be used to indicate that probing for voice communication capability is requested. When the S-CSCF receiving the probe request has one ore more contact addresses registered for the destination subscriber, but these contact addresses support Messaging only, not voice, then the S-CSCF 22 should return a non-2xx response, optionally including an indication of the reason why the response is not 200 Ok.

The SIP Probe method is intended for testing the status of a destination network entity. The method may be used for testing the reachability, for SIP signalling, of a "host". When applying SIP Probe for testing the reachability of a destination subscriber, the host is constituted by an IMS public user identity (IMPU) of the destination subscriber. For example (the text printed in bold forms the host for the Probe request):

### Probe sip:john.smith@ericsson.com SIP/2.0

When SIP probe is used for the testing the reachability of a destination IMS network, then the host is constituted by the domain of the destination network, for example:

### Probe sip:ericsson.com SIP/2.0

SIP Probe may also be used for testing the reachability of an IMS service, such as a Freephone service, for example:

### Probe tel:08001234 SIP/2.0

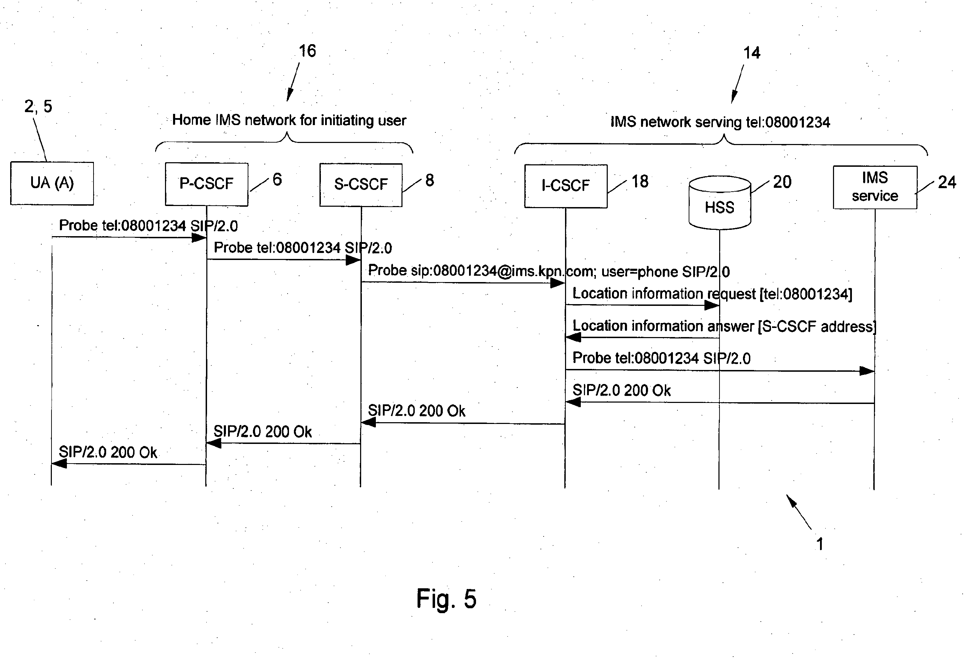

Fig. 5 shows a schematic representation of an example of a probe towards a public service. It will be clear that an ENUM query by the S-CSCF 8 is not depicted, but may be performed as is known in the art.

The I-CSCF 18 may convert the SIP URI in the probe request into a Tel: URI, as is also done for SIP Invite. The I-CSCF 18 may then forward the probe request containing the Tel: URI to the IMS service 24. The IMS Service 24 would, when receiving the probe request, signal that the phone service is available, by responding with 200 Ok to the I-CSCF. The 200 Ok is forwarded to the originator.

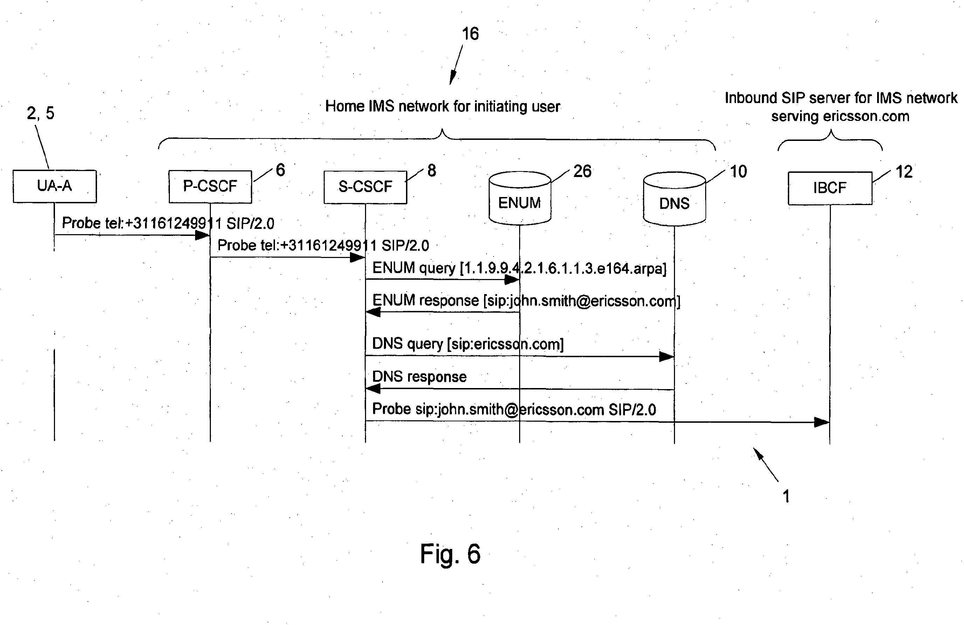

Fig. 6 shows a schematic representation of an example wherein the probed destination subscriber is identified through a Tel: URI instead of through a SIP URI. Fig. 6 shows the handling of a Tel: URI in a probe request.

In the example of Fig. 6, the S-CSCF 8 handling the probe request applies an ENUM 26 query as normal. The Tel: URI provided by the originator 2 of the probe request is converted into a SIP URI. Once the Tel: URI has been converted into the SIP URI, the probe request can be further handled as described hereinabove with respect to the subscriber probe case. Hence, the probe request can be transmitted towards sip:john.smith@ericsson.com in the example of Fig. 6.

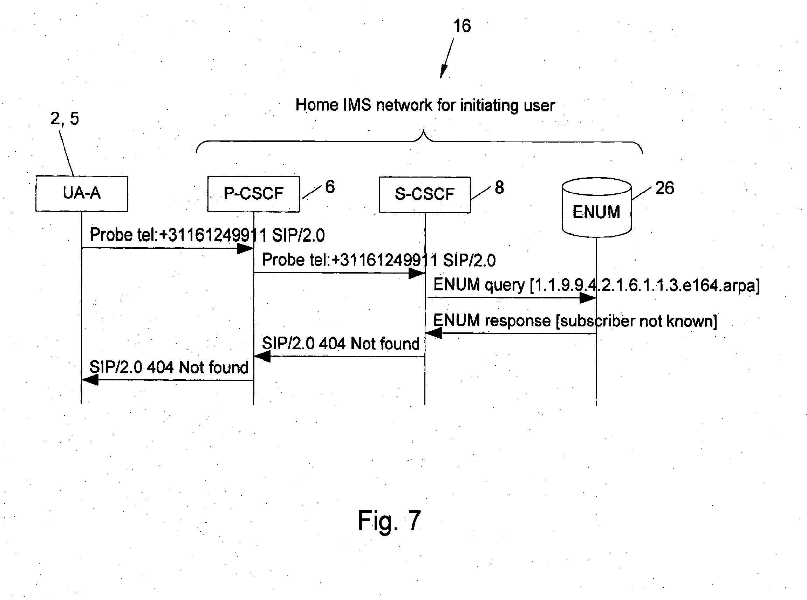

Fig. 7 shows the scenario wherein the destination subscriber is not known in ENUM 26. The fact that the destination subscriber is not known in ENUM 26 does not necessarily preclude the establishment of a voice call to that destination subscriber. However, there is no possibility to probe that subscriber. Thus, here the S-CSCF 8 returns a non-2xx response, optionally including a reason why the response is not a 200 Ok.

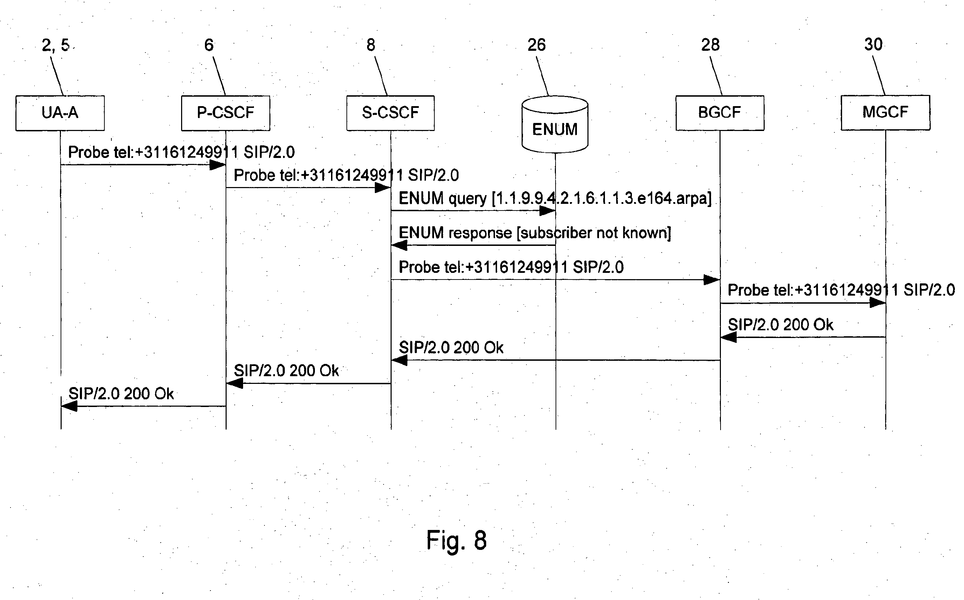

As an alternative to the sequence shown in the example of Fig. 7, the S-CSCF 8 may apply "Circuit switched (CS) breakout" for the probe request, as it would do for a SIP Invite that is used for establishing a voice call or video call. An example of this is shown in Fig. 8.

In the example of Fig. 8 the probe request is forwarded to a Breakout Gateway Control Function (BGCF) 28, after it appeared that the destination subscriber is not known in ENUM 26. The BGCF in turn forwards the probe request to a Media Gateway Control Function (MGCF) 30. The MGCF returns a 200 Ok.

In the foregoing specification, the invention has been described with reference to specific examples of embodiments of the invention. It will, however, be evident that various modifications and changes may be made therein without departing from the invention as set forth in the appended claims.

In the examples, transmission of a probe request is described as a dedicated SIP method, herein referred to as "PROBE". It will be appreciated that alternatively transmission of the probe request may be an extension of an existing SIP method, e.g. the SIP method MESSAGE (see IETF RFC 3428 [2]). IETF RFC 3428 ch.4 states that "MESSAGE requests do not initiate dialogs". So therefore the SIP method MESSAGE can be extended to give similar behaviour as the dedicated method PROBE. Likewise, an other SIP method than MESSAGE could be extended for this purpose, whereby such other SIP method should, similarly to MESSAGE, not initiate dialogs.

However, other modifications, variations, and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Method for checking, in an Internet Protocol based multimedia communications network (1), a status of a destination network entity (4), the method comprising:
transmitting, by a requesting network entity (2, 5), a probe request towards a further network entity (19) acting for the destination network entity (4), the further network entity (19) being aware of the status of the destination network entity (4), said probe request requesting said further network entity (19) to indicate to the requesting network entity the status of the destination network entity (4), and
transmitting by the further network entity (19) acting for the destination network entity, in response to receiving the probe request, a final response,
wherein the final response provides an indication of the status of the destination network entity.

2. Method according to claim 1, wherein the further network entity (19) is aware of the status of the destination network entity (4) by means of registration of the destination network entity (4) with the further network entity (19), or by means of information available in a memory associated with the further network entity (19).

3. Method according to claim 1 or 2, wherein the probe request and the final response are Session Initiation Protocol messages part of a Session Initiation Protocol transaction, wherein the final response ends the Session Initiation Protocol transaction.

4. Method according to claim 1, 2 or 3, wherein the status is one or more of existence, reachability and operational condition of the destination network entity, and the final response provides an indication whether or not the destination network (4) entity exists, and/or is reachable, and/or of its operational condition.

5. Method according to claim 1, 2, 3 or 4, wherein the destination network entity (4) is an Internet protocol Multimedia Subsystem subscriber, wherein the network entity (19) acting for the Internet protocol Multimedia Subsystem subscriber may be a Serving Call Session Control Function (22) with which the Internet protocol Multimedia Subsystem subscriber is registered.

6. Method according to claim 5, wherein the final response includes information relating to the subscriber, such as a registration state of the subscriber.

7. Method according to claim 5 or 6, wherein the subscriber is identified through a Telephone Uniform Resource Identifier, and the method includes converting the Telephone Uniform Resource Identifier into a Session Initiation Protocol Uniform Resource Identifier, e.g. using an ENUM (26) query.

8. Method according to claim 1, wherein the destination network entity (4) is an Internet protocol Multimedia Subsystem network service entity (24), wherein the network entity acting for the Internet protocol Multimedia Subsystem network service entity is an Application Server.

9. Method according to any one of the preceding claims, wherein the probe request includes a condition, e.g. to limit the checking to one or more predetermined types of destination network entities (4).

10. Network entity (19) for use in an Internet Protocol based multimedia communication network (1), comprising
a receiving unit (11, 21) arranged for receiving a probe request, said probe request requesting said network entity (19) to indicate to an originator (2, 5) of the probe request a status of a further network (4) entity on behalf of which the network entity (19) acts,
a processing unit (13, 23) arranged for being aware of the status of the further network entity and
a transmitting unit (15, 25) arranged for transmitting, in response to receiving the probe request, a final response to the originator (2, 5) of the probe request,
wherein the final response provides an indication of the further network (4) entity on behalf of which the network entity acts.

11. Network entity (19) according to claim 10, wherein the network entity (19) is aware of the status of the further network entity (4) by means of registration of the further network entity (4) with the network entity (19), or by means of information available in a memory associated with the network entity (19).

12. Network entity (19) according to claim 10 or 11, wherein the network entity is formed by:
- a Serving Call Session Control Function (22) with which an Internet protocol Multimedia Subsystem subscriber is registered, or
- an Internet protocol Multimedia Subsystem service (24) acting on behalf of the Internet protocol Multimedia Subsystem subscriber, such as a call forwarding service.

13. Network entity (19) according to any one of claims claim 10-12, wherein the status is one or more of existence, reachability and operational condition of the further network entity (4), and preferably the final response is
- a 200 Ok Message if the network entity or the further network entity exists and is reachable, and is
- a non-2xx final response if the network entity or the further network entity does not exist and/or is not reachable.

14. Network entity (5) for use in an Internet Protocol based multimedia communications network (1), comprising
a transmitting unit (9) arranged for transmitting a probe request towards a destination network entity (19) being aware of a status of a further network entity on behalf of which the destination network (19) entity acts, said probe request instructing said destination network entity (19) to transmit, in response to receiving said probe request, a final response, wherein the final response provides an indication of the status of the further network entity (4) on behalf of which the destination network (19) entity acts.

## Patentansprüche

1. Verfahren zum Überprüfen, in einem Internet Protocol-basierten Multimedia-Kommunikationsnetz (1), eines Status einer Zielnetzentität (4), wobei das Verfahren Folgendes umfasst:
Senden, durch eine anfordernde Netzentität (2, 5), einer Sondierungsanforderung an eine weitere Netzentität (19), die als die Zielnetzentität (4) agiert, wobei die weitere Netzentität (19) den Status der Zielnetzentität (4) kennt, wobei die Sondierungsanforderung von der weiteren Netzentität (19) verlangt, der anfordernden Netzentität den Status der Zielnetzentität (4) anzugeben, und
Senden, durch die weitere Netzentität (19), die als die Zielnetzentität agiert, in Reaktion auf das Empfangen der Sondierungsanforderung, einer endgültigen Antwort,
wobei die endgültige Antwort einen Hinweis auf den Status der Zielnetzentität bereitstellt.

2. Verfahren nach Anspruch 1, wobei die weitere Netzentität (19) den Status der Zielnetzentität (4) mittels einer Registrierung der Zielnetzentität (4) bei der weiteren Netzentität (19) oder mittels Informationen, die in einem Speicher verfügbar sind, der der weiteren Netzentität (19) zugeordnet ist, kennt.

3. Verfahren nach Anspruch 1 oder 2, wobei die Sondierungsanforderung und die endgültige Antwort der Session Initiation Protocol-Nachrichtenteil einer Session Initiation Protocol-Transaktion sind, wobei die endgültige Antwort die Session Initiation Protocol-Transaktion beendet.

4. Verfahren nach Anspruch 1, 2 oder 3, wobei der Status eines oder mehrere von Folgendem ist: Existenz, Erreichbarkeit und Betriebszustand der Zielnetzentität; und die endgültige Antwort einen Hinweis darauf gibt, ob die Zielnetzentität (4) existiert und/oder erreichbar ist oder nicht und/oder welchen Betriebszustand sie hat.

5. Verfahren nach Anspruch 1, 2, 3 oder 4, wobei die Zielnetzentität (4) ein Internet Protocol-Multimedia Subsystem-Teilnehmer ist, wobei die Netzentität (19), die als der Internet Protocol-Multimedia Subsystem-Teilnehmer agiert, eine Serving Call Session Control-Funktion (22) sein kann, bei der der Internet Protocol-Multimedia Subsystem-Teilnehmer registriert ist.

6. Verfahren nach Anspruch 5, wobei die endgültige Antwort Informationen über den Teilnehmer enthält, wie zum Beispiel einen Registrierungszustand des Teilnehmers.

7. Verfahren nach Anspruch 5 oder 6, wobei der Teilnehmer durch einen Telephone Uniform Resource-Identifikator identifiziert wird, und das Verfahren enthält, den Telephone Uniform Resource-Identifikator in einen Session Initiation Protocol Uniform Resource-Identifikator zum Beispiel unter Verwendung einer ENUM (26)-Anfrage umzuwandeln.

8. Verfahren nach Anspruch 1, wobei die Zielnetzentität (4) eine Internet Protocol Multimedia Subsystem-Netzdienstentität (24) ist, wobei die Netzentität, die als die Internet Protocol Multimedia Subsystem-Netzdienstentität agiert, ein Anwendungsserver ist.

9. Verfahren nach einem der vorangehenden Ansprüche, wobei die Sondierungsanforderung eine Bedingung enthält, zum Beispiel das Überprüfen auf eine oder mehrere zuvor festgelegte Arten von Zielnetzentitäten (4) zu beschränken.

10. Netzentität (19) zur Verwendung in einem Internet Protocol-basierten Multimedia-Kommunikationsnetz (1), die Folgendes umfasst:
eine Empfangseinheit (11, 21), die dafür ausgelegt ist, eine Sondierungsanforderung zu empfangen, wobei die Sondierungsanforderung die Netzentität (19) auffordert, einem Originator (2, 5) der Sondierungsanforderung einen Status einer weiteren Netzentität (4), in deren Auftrag die Netzentität (19) agiert, anzugeben,
eine Verarbeitungseinheit (13, 23), die dafür ausgelegt ist, den Status der weiteren Netzentität zu kennen, und
eine Sendeeinheit (15, 25), die dafür ausgelegt ist, in Reaktion auf das Empfangen der Sondierungsanforderung eine endgültige Antwort an den Originator (2, 5) der Sondierungsanforderung zu senden,
wobei die endgültige Antwort einen Hinweis auf die weitere Netzentität (4) enthält, in deren Auftrag die Netzentität agiert.

11. Netzentität (19) nach Anspruch 10, wobei die Netzentität (19) den Status der weiteren Netzentität (4) mittels einer Registrierung der weiteren Netzentität (4) bei der Netzentität (19) oder mittels Informationen, die in einem Speicher verfügbar sind, der der Netzentität (19) zugeordnet ist, kennt.

12. Netzentität (19) nach Anspruch 10 oder 11, wobei die Netzentität gebildet wird durch:
- eine Serving Call Session Control-Funktion (22), bei der ein Internet Protocol-Multimedia Subsystem-Teilnehmer registriert ist, oder
- einen Internet Protocol Multimedia Subsystem-Dienst (24), der im Auftrag des Internet Protocol-Multimedia Subsystem-Teilnehmers agiert, wie zum Beispiel eines Anrufweiterleitungsdienstes.

13. Netzentität (19) nach einem der Ansprüche 10-12, wobei der Status eines oder mehrere von Folgendem ist: Existenz, Erreichbarkeit und Betriebszustand der weiteren Netzentität (4), und die endgültige Antwort vorzugsweise Folgendes ist:
- eine 200 Ok Message, wenn die Netzentität oder die weitere Netzentität existiert und erreichbar ist, und
- eine endgültige nicht-2xx-Antwort, wenn die Netzentität oder die weitere Netzentität nicht existiert und/oder nicht erreichbar ist.

14. Netzentität (5) zur Verwendung in einem Internet Protocol-basierten Multimedia-Kommunikationsnetz (1), die Folgendes umfasst:
eine Sendeeinheit (9), die dafür ausgelegt ist, eine Sondierungsanforderung an eine Zielnetzentität (19) zu senden, die einen Status einer weiteren Netzentität kennt, in deren Auftrag die Zielnetzentität (19) agiert, wobei die Sondierungsanforderung die Zielnetzentität (19) anweist, in Reaktion auf das Empfangen der Sondierungsanforderung eine endgültige Antwort zu senden, wobei die endgültige Antwort einen Hinweis auf den Status der weiteren Netzentität (4) bereitstellt, in deren Auftrag die Zielnetzentität (19) agiert.

## Revendications

1. Procédé de vérification, dans un réseau de communications multimédia basé sur protocole Internet (1), d'un statut d'une entité de réseau de destination (4), le procédé comprenant de :
transmettre, par une entité de réseau demandeuse (2, 5), une demande de sondage vers une autre entité de réseau (19) agissant comme entité de réseau de destination (4), l'autre entité de réseau (19) étant avertie du statut de l'entité de réseau de destination (4), ladite demande de sondage demandant à ladite autre entité de réseau (19) d'indiquer à l'entité de réseau demandeuse le statut de l'entité de réseau de destination (4), et
transmettre par l'autre entité de réseau (19) agissant comme l'entité de réseau de destination, en réponse à la réception de la demande de sondage, une réponse finale,
dans lequel la réponse finale fournit une indication du statut de l'entité de réseau de destination.

2. Procédé selon la revendication 1, dans lequel l'autre entité de réseau (19) est averti du statut de l'entité de réseau de destination (4) au moyen de l'enregistrement de l'entité de réseau de destination (4) chez l' »autre entité de réseau (19), ou au moyen d'une information disponible dans une mémoire associée à l'autre entité de réseau (19).

3. Procédé selon la revendication 1 ou 2, dans lequel la demande de sondage et la réponse finale sont des messages de protocole d'amorce de session faisant partie d'une transaction de protocole d'amorce de session, dans lequel la réponse finale met fin à la transaction de protocole d'amorce de session.

4. Procédé selon la revendication 1, 2 ou 3, dans lequel le statut est un ou plusieurs de l'existence, l'accessibilité et la condition opérationnelle de l'entité de réseau de destination, et la réponse finale fournit une indication de ce que ou non l'entité de réseau de destination (4) existe, et/ou est accessible et/ou de sa condition opérationnelle.

5. Procédé selon la revendication 1, 2, 3 ou 4, dans lequel l'entité de réseau de destination (4) est un abonné de sous-système multimédia à protocole Internet, dans lequel l'entité de réseau (19) agissant comme abonné de sous-système multimédia à protocole Internet peut être une fonction de commande de session d'appel de desserte (22) chez laquelle l'abonné de sous-système multimédia à protocole Internet est enregistré.

6. Procédé selon la revendication 5, dans lequel la réponse finale inclut une information relative à l'abonné, comme un état d'enregistrement de l'abonné.

7. Procédé selon la revendication 5 ou 6, dans lequel l'abonné est identifié par l'intermédiaire d'un identifiant de ressource uniforme de téléphone, et le procédé inclut de convertir l'identifiant de ressource uniforme de téléphone en un identifiant de ressource uniforme de protocole d'amorce de session, par ex. en utilisant une requête ENUM (26).

8. Procédé selon la revendication 1, dans lequel l'entité de réseau de destination (4) est une entité de service de réseau de sous-système multimédia à protocole Internet (24), dans lequel l'entité de réseau agissant comme entité de service de réseau de sous-système multimédia à protocole Internet est un serveur d'application.

9. Procédé selon une quelconque des revendications précédentes, dans lequel la demande de sondage inclut une condition, par ex. de limiter la vérification à un ou plusieurs types prédéterminés d'entités de réseau de destination (4).

10. Entité de réseau (19) à utiliser dans un réseau de communication multimédia basé sur protocole Internet (1), comprenant :
une unité de réception (11, 12) agencée afin de recevoir une demande de sondage, ladite demande de sondage demandant à ladite entité de réseau (19) d'indiquer à un expéditeur (2, 5) de la demande de sondage un statut d'une autre entité de réseau (4) pour le compte duquel l'entité de réseau (19) agit,
une unité de traitement (13, 23) agencée afin d'être avertie du statut de l'autre entité de réseau et
une unité de transmission (15, 25) agencée afin de transmettre, en réponse à la réception de la demande de sondage, une réponse finale à l'expéditeur (2, 5) de la demande de sondage,
dans lequel la réponse finale fournit une indication de l'autre entité de réseau (4) pour le compte de laquelle l'entité de réseau agit.

11. Entité de réseau (19) selon la revendication 10, dans laquelle l'entité de réseau (19) est avertie du statut de l'autre entité de réseau (4) au moyen de l'enregistrement de l'autre entité de réseau (4) chez l'entité de réseau (19), ou au moyen d'une information disponible dans une mémoire associée à l'entité de réseau (19).

12. Entité de réseau (19) selon la revendication 10 ou 11, dans laquelle l'entité de réseau est formée par :
- une fonction de commande de session d'appel de desserte (22) chez laquelle un abonné de sous-système multimédia à protocole Internet est enregistré, ou
- un service de sous-système multimédia à protocole Internet (24) agissant pour le compte de l'abonné de sous-système multimédia à protocole Internet, tel qu'un service d'acheminement d'appel.

13. Entité de réseau (19) selon une quelconque des revendications 10-12, dans laquelle le statut est un ou plusieurs de l'existence, l'accessibilité et la condition opérationnelle de l'autre entité de réseau (4), et de préférence la réponse finale est :
- un message 200 Ok si l'entité de réseau ou l'autre entité de réseau existe et est accessible, et est
- une réponse finale non 2xx si l'entité de réseau ou l'autre entité de réseau n'existe pas et/ou n'est pas accessible.

14. Entité de réseau (5) à utiliser dans un réseau de communication (1) multimédia basé sur protocole Internet, comprenant :
- une unité de transmission (9) agencée afin de transmettre une demande de sondage vers une entité de réseau de destination (19) étant avertie d'un statut d'une autre entité de réseau pour le compte de laquelle l'entité de réseau de destination (19) agit, ladite demande de sondage donnant instruction à ladite entité de réseau de destination (19) de transmettre, en réponse à la réception de ladite demande de sondage, une réponse finale, dans laquelle la réponse finale fournit une indication du statut de l'autre entité de réseau (4) pour le compte de laquelle l'entité de réseau de destination (19) agit.
